# FASCICULE DE BREVET EUROPEEN

(11) **EP 1 541 276 B1**
(45) Date de publication et mention de la délivrance du brevet: **18.10.2006**
(21) Numéro de dépôt: 04292811.9
(22) Date de dépôt: 29.11.2004
(51) Int. Cl.: B23Q 3/155, B23Q 7/10, B27B 5/30

(54) **Dispositif automatique pour prendre / déposer un outil dans une pile d'outils**
Vorrichtung zur automatischen Aufnahme / Rückgabe eines Werkzeugs von einem / in einen Werkzeugstapel
Device for automatically taking / bringing back a tool from / to a pile of tools

(30) Priorité: 11.12.2003 FR 0314508
(43) Date de publication de la demande: 15.06.2005
(73) Titulaire: SNECMA, 75015 Paris (FR)
(72) Inventeur: Navar, Pierre, 71210 Ecuisses (FR)
(74) Mandataire: Ramey, Daniel

(56) Documents cités:
- FR-A- 2 823 142
- US-A- 5 277 688

## Description

La présente invention concerne un dispositif de montage et de démontage automatiques d'outils sur un automate selon le préambule de la revendication 1 (voir, par exemple, FR-2 823 142-A).

Les outils montés sur un bras robotisé doivent régulièrement être remplacés pour changer le type d'outil utilisé, ses caractéristiques ou tout simplement pour remplacer un outil usé par un neuf.

Les types d'outils concernés par l'invention sont ceux comprenant un orifice axial de montage sur une broche d'entraînement en rotation et notamment des brosses et des meules.

Dans la technique actuelle, les différentes références d'outils sont stockées sur des glissières qui se terminent à leur extrémité inférieure par une pièce en V pour le centrage d'un outil dans une position de montage automatique sur un bras robotisé. Des capteurs sont montés sur l'extrémité inférieure de la glissière pour déterminer la position de l'orifice de montage de l'outil.

On prévoit également, pour chaque référence d'outil, un poste de dépose d'un outil partiellement usé, et de reprise de cet outil, ce poste étant également équipé de capteurs fournissant des informations sur la présence d'un outil partiellement usé et sur sa position.

Cette technique connue présente un certain nombre d'inconvénients :
- les glissières, inclinées à 45°, sont assez longues pour pouvoir supporter chacune une dizaine d'outils, et occupent avec les postes de dépose correspondants un volume d'espace assez important autour de l'automate ;
- le nombre de capteurs utilisés pour chaque référence d'outil est de cinq ou six, ce qui correspond à un total de cinquante à soixante capteurs pour dix références. Comme chaque capteur est relié à une entrée de l'automate, il faut équiper celui-ci d'une carte d'extension d'entrée - sortie, qui est assez onéreuse (typiquement deux milles euros) ;
- lorsque les outils sont des brosses, celles-ci peuvent être déformées plus ou moins en raison de leur souplesse et leur appui sur la pièce en V à l'extrémité de la glissière ne suffit pas toujours à les positionner de façon précise pour leur montage automatique sur un bras robotisé. Dans ce cas, l'opération de montage automatique échoue et un opérateur doit intervenir.

Il a été ainsi constaté, par une analyse du temps de fonctionnement de l'automate, que le temps d'attente pour un changement d'outil est égal ou supérieur au temps d'utilisation qui est environ de six minutes pour une brosse abrasive, l'opérateur devant lancer un programme d'usinage sur l'automate puis revenir effectuer des opérations manuelles à son poste de travail.

Un des buts de la présente invention est de pallier ces inconvénients.

Elle propose à cet effet un dispositif de montage et de démontage automatiques d'outils sur un automate, comprenant des moyens de stockage d'un nombre d'outils identiques et des moyens de centrage d'un outil dans une position de montage automatique sur l'automate, chaque outil comprenant un orifice axial de montage sur une broche d'entraînement en rotation prévue sur l'automate, caractérisé en ce que les moyens de stockage comprennent une surface de support d'une pile d'outils et des moyens de centrage de la pile d'outils, constitués par une tige cylindrique axialement mobile et engagée dans les orifices axiaux des outils de la pile, ladite surface de support comportant un orifice de passage de la broche précitée situé sur l'axe de la pile d'outils et relié par une fente à un bord de la surface de support, de telle sorte que la broche puisse être engagée dans l'orifice de la surface de support et dans l'orifice axial de l'outil inférieur de la pile en repoussant la tige cylindrique de centrage, puis déplacée transversalement dans ladite fente pour extraire cet outil des moyens de stockage.

Dans le dispositif selon l'invention, les outils empilés sont centrés avec précision sur la surface de support grâce à la tige engagée dans leurs orifices axiaux, et cela indépendamment des éventuelles déformations de ces outils dues à leur souplesse (dans le cas des brosses). Ce centrage précis élimine les risques d'échec du montage automatique sur l'automate. De plus, le stockage des outils en piles verticales rend le dispositif beaucoup moins encombrant autour de l'automate.

Selon une caractéristique de l'invention, la surface de support des outils est montée coulissante dans la direction d'empilement des outils et est associée à un capteur de détection de son déplacement et à une seconde surface de support d'outils, située sous la première et ayant sensiblement la même configuration que celle-ci. La mobilité de la première surface de support permet d'une part de contrôler la présence d'un outil sur la broche, d'autre part de contrôler la présence d'outils dans les moyens de stockage et enfin de former un espace de réception d'un outil partiellement usé entre la première et la seconde surface de support, le capteur permettant aussi de contrôler la présence d'un outil partiellement usé dans cet espace de réception.

Dans le dispositif selon l'invention, un seul capteur destiné à détecter les déplacements de la première surface de support suffit pour renseigner l'automate sur le montage correct d'un outil sur la broche d'entraînement en rotation, sur la présence d'outils neufs dans les moyens de stockage et sur la présence d'un outil partiellement usé entre les deux surfaces de support.

Lorsqu'une dizaine de dispositifs selon l'invention sont agencés autour de l'automate, les dix capteurs correspondants peuvent être reliés à l'automate sans qu'il soit nécessaire d'équiper celui-ci d'une carte d'extension d'entrée - sortie. Il en résulte un gain économique important.

L'invention propose également un procédé de montage et démontage automatiques d'outils sur un automate tels qu'un bras robotisé par mise en oeuvre du dispositif selon l'invention, tel que défini à la revendication 11.

Le procédé selon l'invention permet également le démontage d'un outil partiellement usé et la reprise de l'outil partiellement usé, et consiste alors à :
• amener cet outil sous la première surface de support ; et
• pousser la première surface de support d'outils au moyen de l'outil monté sur la broche pour l'écarter de la seconde surface de support d'outils ; et
• déplacer la broche dans une direction parallèle aux surfaces de support, pour amener l'outil entre ces surfaces de support ; et
• déplacer axialement la broche, dans la direction opposée à la pile d'outils, pour l'extraire de l'outil partiellement usé et laisser cet outil entre les deux surfaces de support.

De plus, il suffit d'un petit nombre de positions de la broche dans l'espace, prédéterminées et enregistrées en mémoire, pour programmer les déplacements du bras robotisé aux fins du montage et du démontage automatiques d'outils neufs et d'outils partiellement usés.

D'autres avantages et caractéristiques de l'invention apparaîtront à la lecture de la description qui suit, faite à titre d'exemple non limitatif et en référence aux dessins annexés dans lesquels :
- la figure 1 est une vue schématique en perspective du dispositif selon l'invention ;
- les figures 2 à 5 sont des vues schématiques de côté illustrant le fonctionnement du dispositif selon l'invention lors d'une opération de montage d'un outil ;
- les figures 6 à 9 sont des vues schématiques de côté illustrant le fonctionnement du dispositif selon l'invention lors d'une opération de démontage d'un outil partiellement usé ;
- les figures 10 à 13 sont des vues schématiques de côté illustrant le fonctionnement du dispositif selon l'invention lors d'une opération de montage d'un outil partiellement usé ;
- la figure 14 représente schématiquement les positions définissant le trajet programmé de la broche du robot dans le procédé selon l'invention ;
- les figures 15 et 16 sont des vues schématiques illustrant une broche d'un automate et des moyens d'alignement par rapport aux moyens de centrage du dispositif selon l'invention ;
- la figure 17 est une vue schématique agrandie en coupe axiale d'une partie des moyens de centrage du dispositif selon l'invention ;
- les figures 18 à 22 sont des vues schématiques de côté illustrant le fonctionnement du dispositif selon l'invention lors d'une opération de montage d'un outil, le dispositif étant équipé du système de la figure 17.

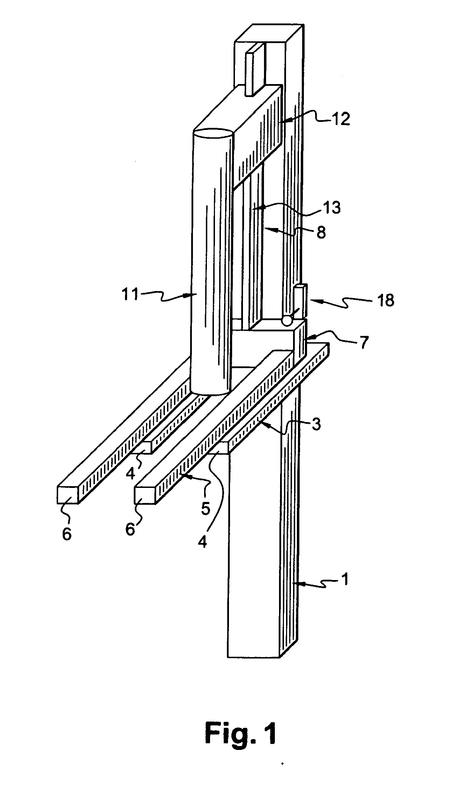

On se réfère d'abord à la figure 1 qui représente schématiquement un mode de réalisation du dispositif selon l'invention.

Ce dispositif est essentiellement destiné au stockage d'outils neufs tels que des brosses ou des meules, et est agencé pour permettre le montage et le démontage automatique de ces outils sur un bras robotisé équipé d'une broche d'entraînement d'un outil en rotation.

Il comprend des moyens de stockage comprenant un montant vertical 1, qui est fixé au sol ou sur un mur par des moyens appropriés et sur lequel est monté fixement sur un support horizontal 3 en forme de fourche, comprenant deux bras parallèles 4 qui s'étendent dans le même sens depuis le montant vertical 1 et qui sont séparés l'un de l'autre par une distance inférieure au diamètre des outils destinés à être stockés dans le dispositif selon l'invention, et supérieure au diamètre de la broche du bras robotisé sur laquelle ces outils doivent être montés, comme on le comprendra plus clairement dans ce qui suit.

Un autre support 5 également en forme de fourche est monté coulissant verticalement sur le montant vertical 1 au-dessus du support fixe 3, et comporte deux bras parallèles 6 reliés entre eux par une barre transversale 7 à leur extrémité située du côté du montant vertical 1.

Les bras horizontaux 6 sont écartés d'une distance sensiblement égale à celle qui sépare les bras 4 de la surface de support fixe 3 et ont une longueur supérieure à celle des bras 4, de sorte qu'ils s'étendent au-delà des bras 4 du côté opposé au montant vertical 1.

La barre transversale 7 de la première surface de support 5 est guidée en coulissement sur un rail vertical 8 qui est fixé ou formé sur une face correspondante du montant vertical 1 et qui s'étend vers le haut à partir de la seconde surface de support fixe 3.

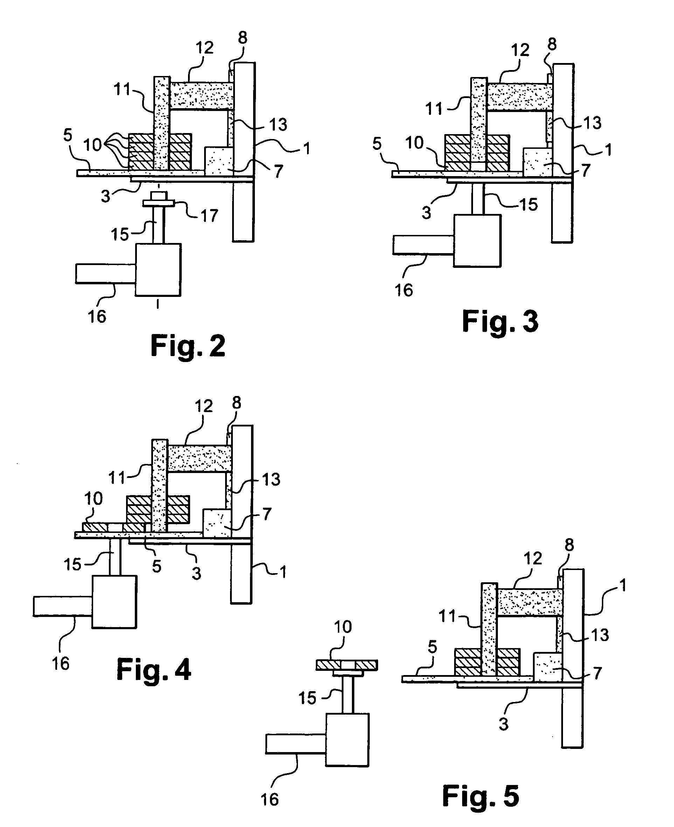

La première surface de support 5 est destinée à supporter une pile d'outils 10, comme représenté aux figures 2 et suivantes, ces outils étant identiques et empilés verticalement les uns sur les autres, l'outil inférieur de la pile reposant sur les deux bras 6 du support 5 qui est lui-même en appui sur les deux bras 4 de la seconde surface de support fixe 3, de telle sorte que les orifices axiaux de ces outils, qui permettent leur montage sur la broche du bras robotisé, se trouvent entre les deux bras 4 de la seconde surface de support fixe 3 et entre les deux bras 6 de la première surface de support 5.

Le dispositif selon l'invention comprend encore des moyens de centrage des outils empilés sur la première surface de support 5, ces moyens de centrage comprenant une tige cylindrique verticale 11 qui s'étend au-dessus de la première surface de support 5 et qui est portée à son extrémité supérieure par un bras horizontal 12 guidé en translation sur le rail vertical 8 du montant 1.

Une barre verticale 13, formant une entretoise ou cale, s'étend vers le bas depuis le bras horizontal 12 en direction de la barre transversale 7 de la première surface de support 5, pour limiter le déplacement vers le bas du bras 12 de façon à ce que l'extrémité inférieure de la tige cylindrique 11, dans sa position la plus basse, se trouve sensiblement au niveau de la face supérieure des bras 6 de la première surface de support 5.

La tige cylindrique 11 a un diamètre légèrement inférieur au diamètre de l'orifice axial des outils 10 de façon à ce que ceux-ci puissent être empilés en étant centrés avec une bonne précision sur l'axe de la tige 11. La précision de ce centrage est par exemple de l'ordre de un à deux millimètres

Le dispositif selon l'invention permet le stockage sur la première surface de support 5 d'une pile de quatre outils 10 dans l'exemple représenté, ce nombre pouvant être supérieur et étant déterminé par la longueur de la tige 11 de centrage et par la dimension correspondante du montant vertical 1 au-dessus de la seconde surface de support fixe 3.

Les outils 10 empilés sur la première surface de support 5 sont, dans cet exemple de réalisation, des outils neufs.

La prise d'un de ces outils par un bras robotisé est représentée schématiquement aux figures 2 à 5.

En figure 2, un bras robotisé 16 d'un automate portant une broche 15 de montage et d'entraînement en rotation d'un outil 10 est amené sous le support fixe 3 de telle sorte que la broche 15 soit orientée verticalement vers le haut et alignée avec l'axe de la tige 11 de centrage des outils 10.

Les outils 10 forment une pile centrée avec précision sur la première surface de support 5 par leurs orifices axiaux traversés par la tige 11, dont l'extrémité inférieure est au niveau de la face inférieure de l'outil inférieur 10 de la pile.

A l'étape suivante, représentée en figure 3, le bras robotisé 16 a été déplacé verticalement vers le haut pour que l'extrémité supérieure de la broche 15 soit engagée entre les bras horizontaux des supports 3 et 5 et se trouve à l'intérieur de l'orifice axial de l'outil inférieur 10 de la pile. Dans cette position, la tige 11 de centrage du dispositif selon l'invention a été repoussée vers le haut par l'extrémité supérieure de la broche 15, et l'extrémité inférieure de la tige 11 se trouve à l'interface entre l'outil inférieur 10 de la pile et l'outil immédiatement au-dessus dans la pile.

La broche 15 comporte un rebord annulaire 17 à une distance de son extrémité supérieure égale à l'épaisseur d'un outil 10. Dans la position de la figure 3, ce rebord annulaire 17 est appliqué sur la face inférieure de l'outil 10 et l'extrémité de la broche 15 est à l'interface entre les deux outils inférieurs 10 de la pile.

L'étape suivante consiste, comme représenté en figure 4, à déplacer horizontalement le bras robot 16 dans une direction parallèle aux bras des supports 3 et 5 pour extraire de la pile l'outil 10 qui est monté sur l'extrémité de la broche 15. Au cours de cette extraction, la tige 11 de centrage est libérée par l'outil 10 monté sur la broche 15 et retombe au niveau de la première surface de support 5, puis comme représenté en figure 5, les outils 10 restant dans la pile redescendent eux-mêmes sur la première surface de support 5, tout en restant centrés par la tige 11.

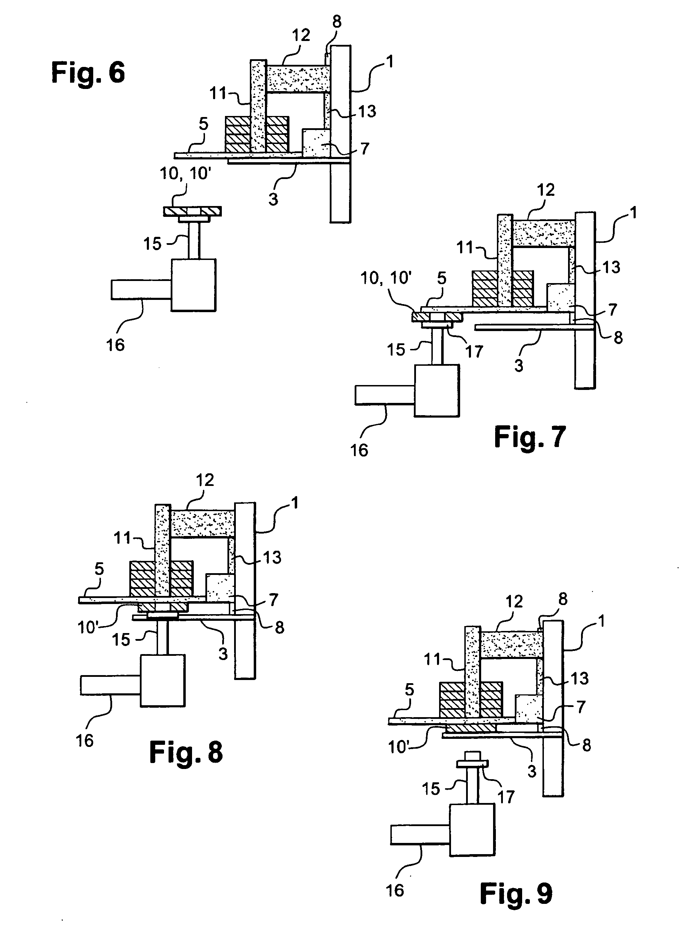

On peut alors procéder à un contrôle de la présence d'un outil 10 à l'extrémité de la broche 15 de la façon suivante décrite en référence aux figures 6 et 7.

En figure 6, le bras robot 16 a été déplacé vers le bas et ramené vers le dispositif selon l'invention de façon à ce que l'outil 10 monté sur la broche 15 se trouve sous les extrémités libres des bras 6 de la première surface de support 5, ces extrémités libres se trouvant au-delà des extrémités libres des bras 4 de la seconde surface de support fixe 3, comme déjà indiqué.

On déplace ensuite le bras robotisé vers le haut comme représenté en figure 7. Si un outil 10 est bien monté à l'extrémité de la broche 15, cet outil va prendre appui sur la face inférieure des extrémités des bras 6 et déplacer le support 5 vers le haut, en l'écartant du support fixe 3. Ce déplacement peut être détecté au moyen d'un capteur 18 monté à cet effet sur le montant vertical 1, et visible en figure 1. Cela confirme d'une part la présence d'un outil 10 sur la broche 15 du bras robotisé et cela confirme également, a posteriori, qu'au moins un outil neuf était stocké dans le dispositif selon l'invention lorsque le bras robotisé 16 a exécuté les manoeuvres de prise d'outil représentées aux figures 2 à 5.

S'il n'y a pas d'outil 10 sur la broche 15 du bras robotisé, l'extrémité supérieure de la broche est déplacée entre les bras 6 du support 5 sans soulever ce dernier et le capteur associé au support 5 ne détecte aucun déplacement de celui-ci vers le haut. Cela confirme que le dispositif selon l'invention ne comprenait pas d'outil 10 lorsque le bras robotisé a effectué les déplacements représentés aux figures 2 à 5, et un signal d'alerte de l'opérateur est généré par le dispositif.

Lorsqu'un outil monté sur la broche 15 du bras robotisé doit être démonté lorsqu'il n'est usé qu'en partie, il est ramené au dispositif selon l'invention et stocké dans celui-ci de la façon suivante, décrite en référence aux figures 6 à 9 :
Les deux premières étapes représentées aux figures 6 et 7 sont celles qui viennent d'être décrites, le bras robotisé 16 amenant l'outil 10' partiellement usé sous les extrémités libres des bras du support 5 puis étant déplacé vers le haut pour que l'outil 10' s'appuie sur les bras du support 5 et pousse celui-ci vers le haut en l'écartant du support fixe 3, d'une distance supérieure à l'épaisseur de l'outil 10'.

L'étape suivante représentée en figure 8 consiste à déplacer horizontalement le bras robotisé 16 pour amener l'outil 10' sensiblement dans l'axe de la tige 11 de centrage, mais entre les supports 3 et 5. Ensuite, le bras robotisé 16 est déplacé verticalement vers le bas pour extraire l'extrémité supérieure de la broche 15 de l'orifice central de l'outil 10' maintenu entre les supports 3 et 5.

On peut ainsi reposer un outil partiellement usé dans le dispositif selon l'invention, sans le mélanger aux outils neufs qui sont empilés sur le support 5.

Cet outil 10' partiellement usé est destiné à être repris par le bras robotisé 16 en priorité par rapport aux outils 10 neufs empilés sur le support 5.

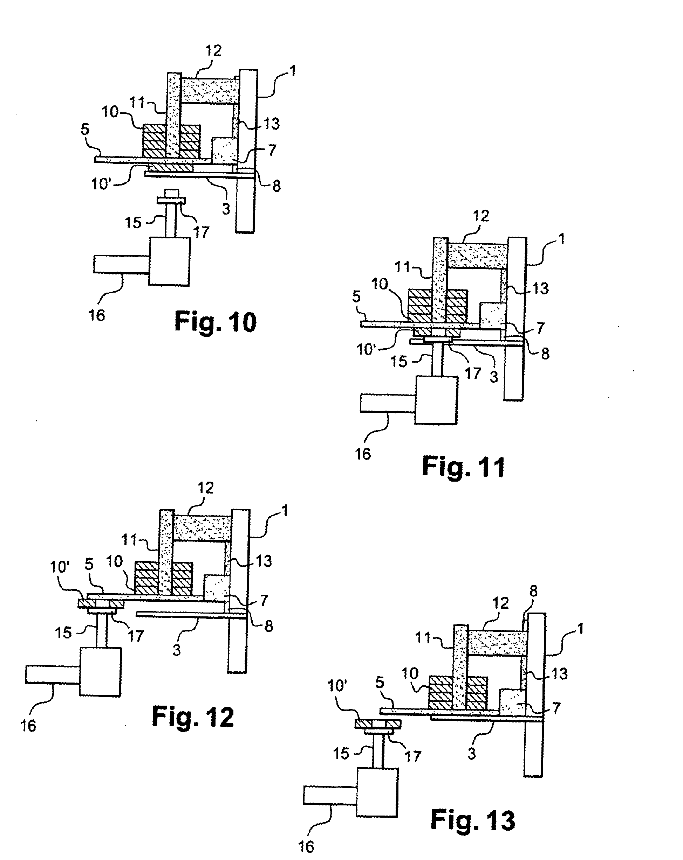

On procède pour cela comme représenté aux figures 10 à 13. En figure 10, le bras robotisé 16 est amené sous le support fixe 3 de telle sorte que la broche 15 soit orientée verticalement vers le haut et alignée avec la tige 11 de centrage des outils 10.

A l'étape suivante, représentée en figure 11, le bras robotisé 16 est déplacé verticalement vers le haut pour que l'extrémité supérieure de la broche 15 s'engage entre les bras horizontaux du support 5 et se trouve à l'intérieur de l'orifice axial de l'outil 10' partiellement usé. Le bras robotisé 16 va déplacer légèrement le support 5 vers le haut au moyen de l'outil 10', afin de faciliter l'extraction de cet outil hors des moyens de stockage.

L'étape suivante consiste, comme représenté en figure 12, à déplacer horizontalement le bras robotisé 16 dans une direction parallèle aux bras des supports 3 et 5 pour extraire l'outil 10' monté sur l'extrémité de la broche 15.

On peut alors procéder à un contrôle de la présence de l'outil 10' à l'extrémité de la broche 15 de la même façon que décrite précédemment, en référence aux figures 6 et 7.

Les positions de la broche 15 dans l'espace peuvent être préalablement déterminées et enregistrées en mémoire, pour la programmation des déplacements du bras robotisé 16 permettant le montage et le démontage automatiques d'outils 10.

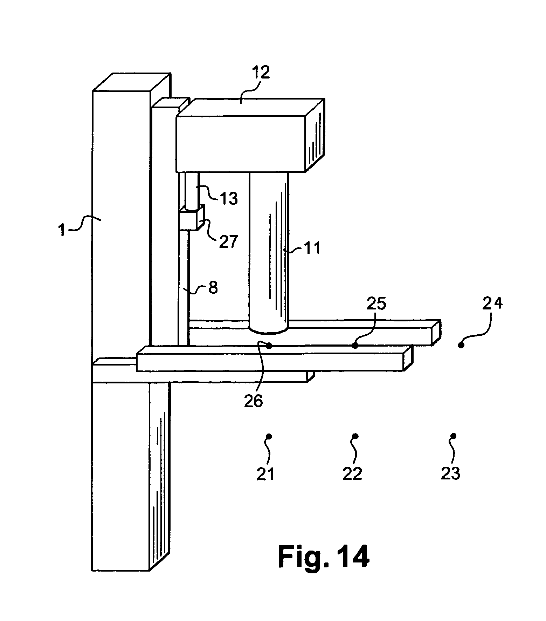

Il suffit de déterminer et d'enregistrer six positions, représentées en figure 14, comprenant trois positions basses 21, 22 et 23 et trois positions hautes 24, 25 et 26, réparties sur un trajet rectangulaire et alignées verticalement deux à deux. Ces six positions permettent de programmer tous les déplacements du bras robotisé pour l'exécution des manoeuvres précédemment décrites.

Ainsi, pour le montage d'un outil neuf 10 ou partiellement usé 10' sur la broche 15, celle-ci se passera par les positions 21, 26 et 24.

Pour le contrôle de la présence de l'outil 10 sur la broche 15, celle-ci passera par les positions 22 et 25.

Enfin, pour le démontage d'un outil 10' partiellement usé monté sur la broche 15, celle-ci passera par les positions 22, 25, 26 et 21.

Par ailleurs, la figure 14 représente une réalisation dans laquelle la barre verticale 13 qui limite la descente de la tige 11, est montée entre le bras horizontal 12 et une butée 27 fixée sur le rail 8 ou sur le montant 1.

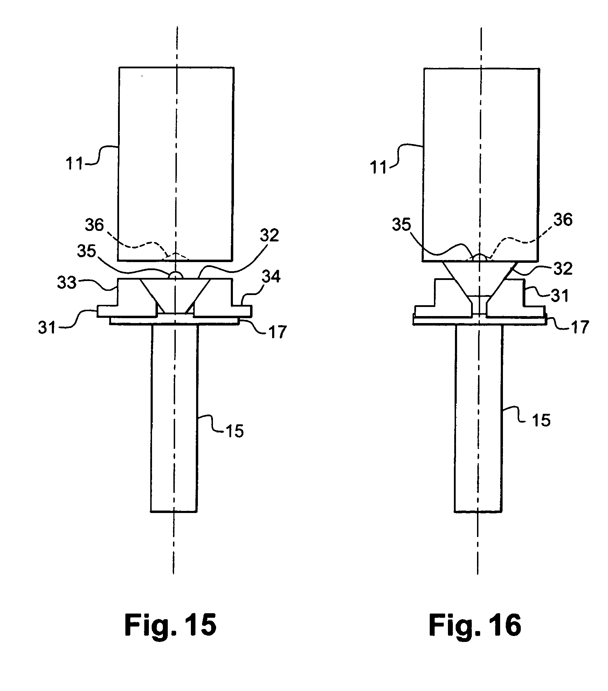

Les figures 15 et 16 représentent un type de broche utilisable avec le dispositif selon l'invention.

La broche cylindrique 15 comporte à son extrémité un rebord annulaire 17, sur lequel sont montés des moyens de fixation de l'outil 10, comprenant au moins deux mors 31 disposés radialement l'un en face de l'autre par rapport à l'axe de la broche 15, et de préférence trois mors 31 répartis à 120° sur la circonférence du rebord annulaire 17.

Les mors 31 sont disposés autour d'un organe 32 tronconique axialement déplaçable en bout de la broche 15 et qui commande l'écartement transversal des mors 31 pour la fixation de l'outil 10 par serrage.

Chaque mors comprend un bord cylindrique 33 d'introduction dans l'orifice axial d'un outil et un rebord annulaire 34 de butée sur l'outil.

L'organe tronconique 32 est formé avec un ergot axial 35 sur sa face d'extrémité, cet ergot pouvant avoir une forme arrondie comme représentée aux figures 15 et 16. Cet ergot 35 est destiné à s'engager dans une petite cavité axiale conique 36 de la face d'extrémité inférieure de la tige 11 pour améliorer l'alignement de la broche 15 avec la tige 11.

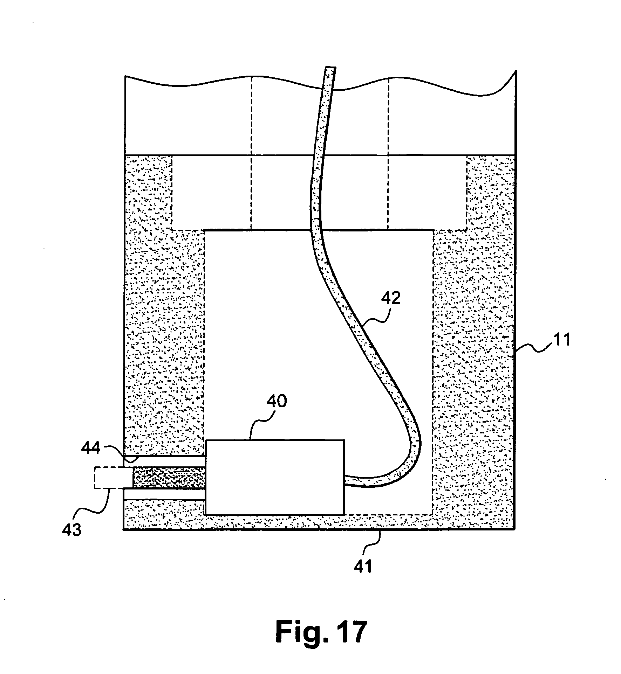

On a représenté en figure 17 des moyens facilitant l'extraction d'un outil 10 d'une pile dans les moyens de stockage. Dans cette figure, la tige 11 est tubulaire et comporte à son extrémité inférieure un micro-vérin 40, par exemple du type pneumatique, monté sur le fond 41 de la tige 11 et alimenté par un conduit souple 42. Une tige de piston 43 du micro-vérin s'étend à travers un orifice radial 44 de la tige 11 et fait saillie à l'extérieur de celle-ci quand le micro-vérin 40 est alimenté. Quand le micro-vérin 40 est mis à l'échappement, la tige de piston 43 est rétractée à l'intérieur de la tige 11 de centrage. La position du micro-vérin 40 est déterminée le long de l'axe de la tige 11 pour que la tige de piston 43 soit au niveau de l'avant-dernier outil de la pile quand la tige 11 est en position basse. Le fonctionnement de ce micro-vérin est décrit dans ce qui suit.

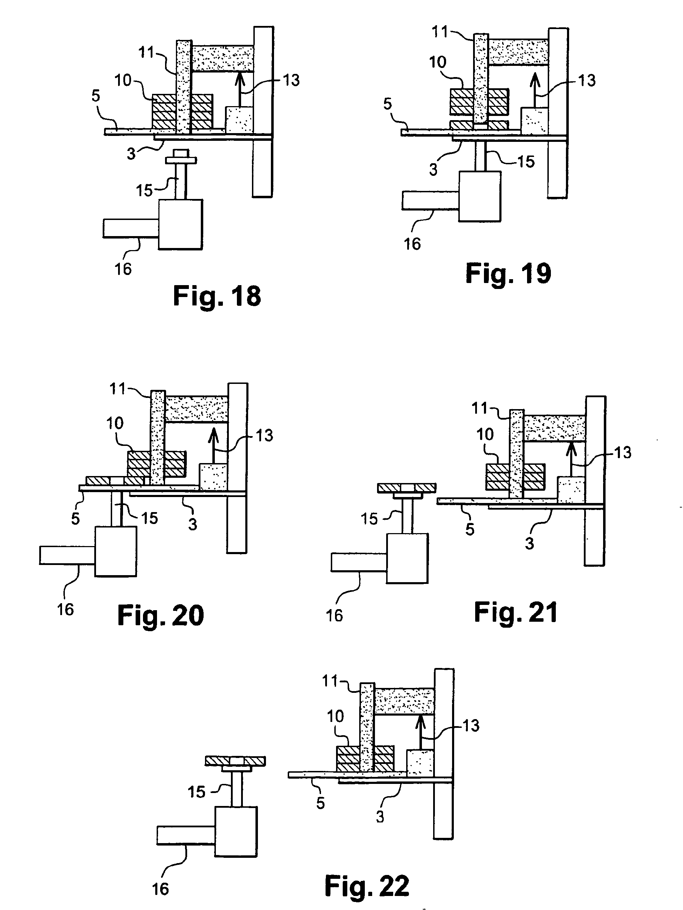

En figure 18, le bras robotisé 16 d'un automate portant une broche 15 de montage et d'entraînement en rotation d'un outil 10 est amené sous le support fixe 3 de telle sorte que la broche 15 soit orientée verticalement vers le haut et alignée avec l'axe de la tige 11 de centrage des outils 10.

L'alimentation du micro-vérin provoque la sortie radiale de la tige de piston 43 qui bloque l'avant-dernier outil de la pile sur la tige 11.

A l'étape suivante, représentée en figure 19, le bras robotisé 16 a été déplacé verticalement vers le haut pour que l'extrémité supérieure de la broche 15 soit engagée entre les bras horizontaux des supports 3 et 5 et se trouve à l'intérieur de l'orifice axial de l'outil inférieur 10 de la pile. Dans cette position, la tige 11 de centrage du dispositif selon l'invention a été repoussée vers le haut par l'extrémité supérieure de la broche 15 et a soulevé l'avant-dernier outil 10 de la pile pour l'écarter axialement du dernier outil 10 monté sur la broche 15.

L'étape suivante consiste, comme représenté en figure 20, à déplacer horizontalement le bras robot 16 dans une direction parallèle aux bras des supports 3 et 5 pour extraire de la pile l'outil 10 inférieur monté sur la broche 15. Au cours de cette extraction, cet outil 10 ne frotte pas sur l'avant-dernier outil de la pile, maintenu écarté par la tige 11 et le micro-vérin 40. Ensuite, la tige 11 redescend, comme représenté en figure 21, le micro-vérin 40 est mis à l'échappement et libère la pile d'outils qui redescend sur le support 5, comme représenté en figure 22.

Dans une variante de réalisation (non représentée), la tige 11 de centrage est montée pivotante sur le bras horizontal 12 autour d'un axe horizontal perpendiculaire à la tige 11 et au bras 12, pour pouvoir être entraînée en pivotement autour de cet axe lors de l'extraction de l'outil inférieur 10 de la pile, quand cette extraction exerce sur la tige 11 un effort supérieur à une valeur prédéterminée (par exemple fixée au moyen d'une goupille de sécurité). On évite ainsi un arrachement accidentel de la tige 11. Des moyens tels qu'un capteur sont prévus pour que le pivotement de la tige 11 déclenche une alarme à l'attention d'un opérateur.

## Revendications

1. Dispositif de montage et de démontage automatiques d'outils (10) sur un automate (16), comprenant des moyens (1) de stockage d'un nombre d'outils (10) identiques et des moyens (11) de centrage d'un outil (10) dans une position de montage automatique sur l'automate (16), chaque outil (10) comprenant un orifice axial de montage sur une broche (15) d'entraînement en rotation prévue sur l'automate (16), **caractérisé en ce que** les moyens (1) de stockage comprennent une surface (5) de support d'une pile d'outils (10) et des moyens de centrage de la pile d'outils (10), constitués par une tige (11) cylindrique axialement mobile et engagée dans les orifices axiaux des outils (10) de la pile, ladite surface (5) de support comportant un orifice de passage de la broche (15) précitée situé sur l'axe de la pile d'outils (10) et relié par une fente à un bord de la surface (5) de support, de telle sorte que la broche (15) puisse être engagée dans l'orifice de la surface (5) de support et dans l'orifice axial de l'outil (10) inférieur de la pile en repoussant la tige (11) cylindrique de centrage, puis déplacée transversalement dans ladite fente pour extraire cet outil (10) des moyens (1) de stockage.

2. Dispositif selon la revendication 1, **caractérisé en ce que** la tige (11) de centrage est guidée en déplacement axial par rapport à la surface (5) de support des outils (10), son déplacement vers ladite surface (5) étant limité par des moyens (13) de butée.

3. Dispositif selon la revendication 2, **caractérisé en ce que** les moyens (13) de butée comprennent une entretoise ou cale disposée entre un bras (12) portant la tige (11) de centrage et la surface (5) de support d'outils (10).

4. Dispositif selon l'une des revendications précédentes, **caractérisé en ce que** la surface (5) de support d'outils (10) est montée coulissante dans la direction d'empilement des outils et coopère avec des moyens (3), qui limitent son déplacement dans le sens opposé à la pile d'outils (10).

5. Dispositif selon la revendication 4, **caractérisé en ce que** les moyens (1) de stockage comprennent une seconde surface (3) de support parallèle à la première surface (5) de support et située sous celle-ci en délimitant avec elle un logement de stockage d'un outil (10') partiellement usé, cette seconde surface (3) de support comprenant un orifice axial de passage de la broche (15), relié par une fente à un bord de cette seconde surface (3) de support, les orifices axiaux et les fentes des deux surfaces (3, 5) de support étant sensiblement identiques et alignés.

6. Dispositif selon la revendication 5, **caractérisé en ce qu**'il comprend un capteur (18) de détection du déplacement de la première surface (5) par rapport à la seconde surface (3) de support d'outils.

7. Dispositif selon l'une des revendications précédentes, **caractérisé en ce que** les outils (10) sont des brosses ou des meules.

8. Dispositif selon l'une des revendications précédentes, **caractérisé en ce que** l'extrémité inférieure de la tige (11) de centrage comprend des moyens (36) de centrage sur l'extrémité de la broche (15) précitée.

9. Dispositif selon l'une des revendications précédentes, **caractérisé en ce que** la tige (11) de centrage comporte un doigt (43) radial destiné à être engagé entre les deux outils (10) inférieurs de la pile et déplacé par un moyen (40) tel qu'un vérin pneumatique.

10. Dispositif selon l'une des revendications précédentes, **caractérisé en ce que** la tige (11) de centrage est montée pivotante sur le bras horizontal (12) autour d'un axe horizontal perpendiculaire à la tige (11) et au bras (12).

11. Procédé de montage et démontage automatiques d'outils (10) sur un automate (16) par mise en oeuvre du dispositif selon l'une des revendications précédentes, **caractérisé en ce qu**'il consiste à :
a. amener la broche (15) de l'automate (16) dans une position prédéterminée sur l'axe (6) de la pile d'outils (10) ;
b. déplacer la broche (15) le long de l'axe (6) pour l'engager dans l'orifice axial de l'outil (10) inférieur de la pile, en repoussant la tige (11) de centrage ; et
c. déplacer la broche (15) dans une direction parallèle à la surface de support (5) pour dégager l'outil (10) des moyens (1) de stockage.

12. Procédé selon la revendication 11, **caractérisé en ce que**, pour déposer un outil (10') partiellement usé monté sur la broche (15), il consiste à :
d. amener cet outil (10) sous la première surface (5) de support ; et
e. pousser la première surface (5) de support d'outils (10) au moyen de l'outil (10') monté sur la broche (15) pour l'écarter de la seconde surface (3) de support d'outils ; et
f. déplacer la broche (15) dans une direction parallèle aux surfaces de support (3, 5) pour amener l'outil (10') entre ces surfaces (3, 5) de support ; et
g. déplacer axialement la broche (15), dans la direction opposée à la pile d'outils (10), pour l'extraire de l'outil (10') partiellement usé et laisser cet outil (10') entre les deux surfaces (3, 5) de support.

13. Procédé selon la revendication 12, **caractérisé en ce que**, pour la reprise d'un outil (10') partiellement usé, il consiste à :
h. amener la broche (15) du robot dans une position déterminée sous les deux surfaces (3, 5) de support d'outils (10) ;
i. déplacer la broche dans l'axe (6), pour l'engager sur l'outil (10') partiellement usé; et
j. déplacer la broche (15) dans une direction parallèle aux surfaces de support (3, 5) pour dégager l'outil (10') desdites surfaces de support (3, 5).

14. Procédé selon l'une des revendications 11 à 13, **caractérisé en ce que**, pour contrôler la présence d'un outil (10) sur la broche (15), il consiste à déplacer la première surface (5) de support d'outils (10) à l'aide de l'outil (10) monté sur la broche (15) du robot et à détecter ce déplacement au moyen d'un capteur (18).

15. Procédé selon l'une des revendications 11 à 14, **caractérisé en ce qu**'il consiste à déterminer préalablement six positions de la broche (15) par rapport aux moyens (1) de stockage, comprenant trois positions hautes à un même niveau et trois positions basses à un même niveau, réparties sur un trajet rectangulaire et alignées verticalement deux à deux, et à déplacer la broche (15) en la faisant passer par ces positions pour le montage d'un outil (10) sur la broche (15), le contrôle de la présence de l'outil (10) sur la broche (15) et la dépose et la reprise d'un outil (10') partiellement usé entre les surfaces (3, 5) de support d'outils (10).

## Claims

1. A device for automatically mounting and dismantling tools (10) on a robot (16), comprising means (1) for storing a number of identical tools (10) and means (11) for centering a tool (10) in a position for automatic mounting on the robot (16), each tool (10) comprising an axial orifice for mounting on a rotating pin (15) provided on the robot (16), **characterized in that** the storage means (1) comprise a surface (5) for supporting a stack of tools (10) and means for centering the stack of tools (10), consisting of an axially movable cylindrical rod (11) engaged in the axial orifices of the tools (10) of the stack, said support surface (5) comprising an orifice through which said pin (15) passes, located on the axis of the stack of tools (10) and connected by a slot to an edge of the support surface (5), such that the pin (15) can be engaged in the orifice of the support surface (5) and in the axial orifice of the lowermost tool (10) of the stack by pushing back the cylindrical centering rod (11), and then moved transversely in said slot to remove this tool (10) from the storage means (1).

2. The device as claimed in claim 1, **characterized in that** the centering rod (11) is guided in its axial movement with respect to the support surface (5) for the tools (10), its movement toward said support surface (5) being limited by stop means (13).

3. The device as claimed in claim 2, **characterized in that** the stop means (13) comprise a spacer or wedge placed between an arm (12) bearing the centering rod (11) and the support surface (5) for tools (10).

4. Device as claimed in one of the preceding claims, **characterized in that** the support surface (5) for tools (10) is mounted so as to slide in the tool stacking direction and cooperates with means (3) that limit its movement in the direction away from the stack of tools (10).

5. The device as claimed in claim 4, **characterized in that** the storage means (1) comprise a second support surface (3) parallel to the first support surface (5) and located under it, delimiting with it a housing for storing a partially worn tool (10'), this second support surface (3) comprising an axial orifice through which the pin (15) passes, connected by a slot to an edge of this second support surface (3), the axial orifices and the slots of the two support surfaces (3, 5) being substantially identical and aligned.

6. The device as claimed in claim 5, **characterized in that** it comprises a sensor (18) for detecting the movement of the first surface (5) with respect to the second surface (3) for supporting tools.

7. The device as claimed in one of the preceding claims, **characterized in that** the tools (10) are brushes or grinding wheels.

8. The device as claimed in one of the preceding claims, **characterized in that** the lower end of the centering rod (11) comprises means (36) for centering on the end of said pin (15).

9. The device as claimed in one of the preceding claims, **characterized in that** the centering rod (11) comprises a radial finger (43) designed to engage between the two lowermost tools (10) of the stack and moved by a means (40) such as a pneumatic ram.

10. The device as claimed in one of the preceding claims, **characterized in that** the centering rod (11) is mounted so as to pivot on the horizontal arm (12) about a horizontal axis perpendicular to the rod (11) and the arm (12).

11. A method of automatically mounting and dismantling tools (10) on a robot (16) by implementing the device as claimed in one of the preceding claims, **characterized in that** it consists in:
a) bringing the pin (15) of the robot (16) into a predetermined position on the axis (6) of the stack of tools (10);
b) moving the pin (15) along the axis (6) to engage it in the axial orifice of the lowermost tool (10) of the stack, by pushing back the centering rod (11); and
c) moving the pin (15) in a direction parallel to the support surface (5) to disengage the tool (10) from the storage means (1).

12. The method as claimed in claim 11, **characterized in that**, to deposit a partially worn tool (10') mounted on the pin (15), it consists in:
d) bringing this tool (10') under the first support surface (5); and
e) pushing the first support surface (5) for tools (10) using the tool (10') mounted on the pin (15) to move it away from the second support surface (3) for tools; and
f) moving the pin (15) in a direction parallel to the support surfaces (3, 5), to bring the tool (10') between these support surfaces (3, 5); and
g) axially moving the pin (15), in the direction away from the stack of tools (10), to remove the partially worn tool (10') and leave this tool (10') between the two support surfaces (3, 5).

13. The method as claimed in claim 12, **characterized in that**, to retrieve a partially worn tool (10'), it consists in:
h) bringing the pin (15) of the robot into a certain position under the two surfaces (3, 5) for supporting tools (10);
i) moving the pin in the axis (6), to engage it on the partially worn tool (10'); and
j) moving the pin (15) in a direction parallel to the support surfaces (3, 5) to disengage the tool (10') from said support surfaces (3, 5).

14. The method as claimed in one of claims 11 to 13, **characterized in that**, to check for the presence of a tool (10) on the pin (15), it consists in moving the first surface (5) for supporting tools (10) using the tool (10) mounted on the pin (15) of the robot and detecting this movement by means of a sensor (18).

15. The method as claimed in one of claims 11 to 14, **characterized in that** it consists in determining beforehand six positions of the pin (15) with respect to the storage means (1), comprising three high positions at the same level and three low positions at the same level, distributed over a rectangular path and aligned vertically in pairs, and in moving the pin (15) by making it pass through these positions in order to mount a tool (10) on the pin (15), check for the presence of the tool (10) on the pin (15), and deposit and retrieve a partially worn tool (10') between the surfaces (3, 5) for supporting tools (10).

## Patentansprüche

1. Vorrichtung zum automatischen Montieren und Demontieren von Werkzeugen (10) an einem Automaten (16), die Mittel (1) zum Lagern einer Anzahl identischer Werkzeuge (10) und Mittel (11) zum Zentrieren eines Werkzeugs (10) in einer automatischen Montageposition an dem Automaten (16) umfasst, wobei jedes Werkzeug (10) eine axial verlaufende Öffnung zum Montieren auf einer an dem Automaten (16) vorgesehenen Werkzeugdrehantriebswelle (15) enthält,
**dadurch gekennzeichnet,**
**dass** die Mittel (1) zum Lagern eine Ablagefläche (5) für einen Stapel Werkzeuge (10) sowie Mittel zum Zentrieren des Stapels Werkzeuge (10) umfassen, welche von einer zylinderförmigen Stange (11) gebildet werden, die axial bewegbar ist und sich in den axial verlaufenden Öffnungen der Werkzeuge (10) des Stapels in Eingriff befindet, wobei die Ablagefläche (5) eine Durchgangsöffnung für die Werkzeugdrehantriebswelle (15) enthält, die sich auf der Achse des Stapels Werkzeuge (10) befindet und durch einen Schlitz mit einem Rand der Ablagefläche (5) verbunden ist, so dass die Werkzeugdrehantriebswelle (15) in der Öffnung der Ablagefläche (5) und in der axial verlaufenden Öffnung des untersten Werkzeugs (10) des Stapels in Eingriff gebracht werden kann, wobei die zylinderförmige Zentrierstange (11) zurückgeschoben wird, und dann in diesem Schlitz quer verschoben werden kann, um dieses Werkzeug (10) aus den Mitteln (1) zum Lagern herauszuziehen.

2. Vorrichtung nach Anspruch 1,
**dadurch gekennzeichnet,**
**dass** die Zentrierstange (11) in axialer Verschiebung zur Ablagefläche (5) für die Werkzeuge (10) geführt wird, wobei ihre Verschiebung zu dieser Fläche (5) hin durch Anschlagmittel (13) begrenzt ist.

3. Vorrichtung nach Anspruch 2,
**dadurch gekennzeichnet,**
**dass** die Anschlagmittel (13) eine Strebe oder Distanzleiste umfassen, die zwischen einem Arm (12), an dem die Zentrierstange (11) sitzt, und der Ablagefläche (5) der Werkzeuge (10) angeordnet ist.

4. Vorrichtung nach einem der vorherigen Ansprüche,
**dadurch gekennzeichnet,**
**dass** die Ablagefläche (5) der Werkzeuge (10) in Stapelrichtung der Werkzeuge gleitend angebracht ist und mit Mitteln (3), die deren Verschiebung in der vom Stapel Werkzeuge (10) abgekehrten Richtung begrenzen, zusammenwirkt.

5. Vorrichtung nach Anspruch 4,
**dadurch gekennzeichnet,**
**dass** die Mittel (1) zum Lagern eine zweite Ablagefläche (3) umfassen, die parallel zur ersten Ablagefläche (5) liegt und sich unter dieser befindet, wobei sie mit ihr eine Lagerungsaufnahme für ein teilweise verschlissenes Werkzeug (10') umgrenzt, wobei diese zweite Ablagefläche (3) eine axial verlaufende Durchgangsöffnung für die Werkzeugdrehantriebswelle (15) enthält, die durch einen Schlitz mit einem Rand dieser zweiten Ablagefläche (3) verbunden ist, wobei die axial verlaufenden Öffnungen und die Schlitze der beiden Ablageflächen (3, 5) im Wesentlichen gleich und aufeinander ausgerichtet sind.

6. Vorrichtung nach Anspruch 5,
**dadurch gekennzeichnet,**
**dass** sie einen Sensor (18) zur Messung der Verschiebung der ersten Ablagefläche (5) gegenüber der zweiten Werkzeugablagefläche (3) aufweist.

7. Vorrichtung nach einem der vorherigen Ansprüche,
**dadurch gekennzeichnet,**
**dass** die Werkzeuge (10) Bürsten oder Schleifkörper sind.

8. Vorrichtung nach einem der vorherigen Ansprüche,
**dadurch gekennzeichnet,**
**dass** das untere Ende der Zentrierstange (11) Zentriermittel (36) zum Zentrieren auf dem Ende der Werkzeugdrehantriebswelle (15) enthält.

9. Vorrichtung nach einem der vorherigen Ansprüche,
**dadurch gekennzeichnet,**
**dass** die Zentrierstange (11) einen radial verlaufenden Finger (43) aufweist, der dazu gedacht ist, zwischen den beiden untersten Werkzeugen (10) des Stapels in Eingriff gebracht und durch ein Mittel (40) wie beispielsweise einen Pneumatikzylinder verschoben zu werden.

10. Vorrichtung nach einem der vorherigen Ansprüche,
**dadurch gekennzeichnet,**
**dass** die Zentrierstange (11) an dem horizontalen Arm (12) um eine senkrecht zu der Stange (11) und zu dem Arm (12) verlaufende horizontale Achse schwenkbar angebracht ist.

11. Verfahren zum automatischen Montieren und Demontieren von Werkzeugen (10) an einem Automaten (16) durch Einsatz der Vorrichtung nach einem der vorherigen Ansprüche,
**dadurch gekennzeichnet,**
**dass** es darin besteht,
die Antriebswelle (15) des Automaten (16) in eine vorbestimmte Position auf der Achse (6) des Stapels Werkzeuge (10) zu bringen,
die Antriebswelle (15) entlang der Achse (6) zu verschieben, um sie in der axialen Öffnung des untersten Werkzeugs (10) in Eingriff zu bringen, wobei die zylinderförmige Zentrierstange (11) zurückgeschoben wird, und
die Antriebswelle (15) in einer parallel zur Ablagefläche (5) verlaufenden Richtung zu verschieben, um das Werkzeug (10) von den Mitteln (1) zum Lagern zu lösen.

12. Verfahren nach Anspruch 11,
**dadurch gekennzeichnet,**
**dass** es, um ein teilweise verschlissenes Werkzeug (10') abzulegen, das an der Antriebswelle (15) montiert ist, darin besteht,
dieses Werkzeug (10') unter die erste Ablagefläche (5) zu bringen, und
die erste Ablagefläche (5) für Werkzeuge (10) mittels des an der Antriebswelle (15) montierten Werkzeugs (10') dahingehend zu schieben, dass sie sich von der zweiten Werkzeugablagefläche (3) entfernt, und
die Antriebswelle (15) in einer Richtung zu verschieben, die parallel zu den Ablageflächen (3, 5) verläuft, um das Werkzeug (10') zwischen diese Ablageflächen (3, 5) zu bringen, und
die Antriebswelle (15) in einer von dem Stapel Werkzeuge (10) wegführenden Richtung zu verschieben, um sie aus dem teilweise verschlissenen Werkzeug (10') herauszuziehen und dieses Werkzeug (10') zwischen den beiden Ablageflächen (3, 5) zurückzulassen.

13. Verfahren nach Anspruch 12,
**dadurch gekennzeichnet,**
**dass** es, um ein teilweise verschlissenes Werkzeug (10') wieder aufzunehmen, darin besteht,
die Antriebswelle (15) des Roboters in eine vorbestimmte Position unter den beiden Ablageflächen (3, 5) für Werkzeuge (10) zu bringen,
die Antriebswelle (15) auf der Achse (6) zu verschieben, um sie an dem teilweise verschlissenen Werkzeug (10') in Eingriff zu bringen, und
die Antriebswelle (15) in einer Richtung zu verschieben, die parallel zu den Ablageflächen (3, 5) verläuft, um das Werkzeug (10') von diesen Ablageflächen (3, 5) zu lösen.

14. Verfahren nach einem der Ansprüche 11 bis 13,
**dadurch gekennzeichnet,**
**dass** es, um das Vorhandensein eines Werkzeugs (10) an der Antriebswelle (15) zu kontrollieren, darin besteht, die erste Ablagefläche (5) für Werkzeuge (10) mit Hilfe des an der Antriebswelle (15) des Roboters montierten Werkzeugs (10) zu verschieben und diese Verschiebung mittels eines Sensors (18) zu messen.

15. Verfahren nach einem der Ansprüche 11 bis 14,
**dadurch gekennzeichnet,**
**dass** es darin besteht, vorab sechs Stellungen der Antriebswelle (15) gegenüber den Mitteln (1) zum Lagern zu bestimmen, und zwar drei obere Stellungen in einem und demselben Bereich und drei untere Stellungen in einem und demselben Bereich, die über eine rechtwinklige Bahn verteilt und vertikal paarweise aufeinander ausgerichtet sind, und die Antriebswelle (15) zu verschieben, indem sie für das Montieren eines Werkzeugs (10) an der Antriebswelle (15), für die Kontrolle des Vorhandenseins des Werkzeugs (10) an der Antriebswelle (15) und für das Ablegen und Wiederaufnehmen eines teilweise verschlissenen Werkzeugs (10') zwischen den Ablageflächen (3, 5) für Werkzeuge (10) durch diese Stellungen geführt wird.
